# FASCICULE DE BREVET EUROPEEN

(11) **EP 1 366 988 B1**
(45) Date de publication et mention de la délivrance du brevet: **15.04.2009**
(21) Numéro de dépôt: 03352012.3
(22) Date de dépôt: 28.05.2003
(51) Int. Cl.: B64D 11/06, B60R 7/04

(54) **Coffre à bagages pour aéronef**
Gepäckablage für ein Flugzeug
Luggage bin for aircraft

(30) Priorité: 30.05.2002 FR 0206609
(43) Date de publication de la demande: 03.12.2003
(73) Titulaire: Airbus, 31700 Blagnac (FR)
(72) Inventeur: Saint-Jalmes, Bruno, 31500 Toulouse (FR)
(74) Mandataire: Hartmann, Jean-Luc

(56) Documents cités:
- DE-A- 2 034 103
- DE-U- 29 515 306

## Description

La présente invention concerne un coffre à bagages pour aéronef.

Habituellement, dans un aéronef, les bagages à main accompagnant les voyageurs en cabine sont disposés dans un coffre à bagages disposé en hauteur, au-dessus des sièges. Cette disposition est classique et se retrouve dans d'autres moyens de locomotion, comme par exemple dans les autocars ou les trains.

Dans un aéronef, bien que très souvent utilisée, cette place pour les bagages présente plusieurs inconvénients. Compte tenu de la forme d'une cabine d'aéronef, dont la section présente généralement une forme en arc de cercle, il reste peu de place libre au-dessus de la tête des passagers assis. En se levant, il convient donc de veiller à ne pas se heurter la tête contre le coffre à bagages.

En outre, les cabines d'aéronefs présentent le plus souvent une hauteur relativement faible et le fait de prévoir en hauteur des coffres à bagages, qui sont fermés par un volet rabattable, donne à l'espace intérieur d'une cabine d'aéronef un aspect confiné.

Dans un aéronef, il existe des exigences de sécurité contraignantes. Les bagages doivent être enfermés et ne pas risquer de sortir de leur logement pendant un vol. De plus, le volume et les dimensions des bagages sont normalisés. Il faut donc prévoir des logements capables d'accueillir un bagage normalisé. Ces logements doivent aussi être facilement accessibles. Il faut en outre aussi prévoir de la place pour des équipements tels des gilets de sauvetage.

Un coffre à bagages comportant les caractéristiques du préambule de la revendication 1 est connu de DE-A-2 034 103.

La présente invention a alors pour but de fournir un nouveau coffre à bagages pour un aéronef répondant aux contraintes à respecter dans cette application aéronautique, et permettant de libérer l'espace se trouvant au-dessus des passagers assis.

A cet effet, elle propose un coffre à bagages pour aéronef comportant un casier pour recevoir des bagages, de forme générale parallélépipédique et présentant un fond à partir duquel s'étend au moins une paroi inférieure et une ouverture se trouvant du côté opposé au fond, ce coffre à bagages étant disposé dans un compartiment sous une assise d'un siège, cette assise pouvant pivoter autour d'un axe horizontal et le casier étant mobile entre d'une part une position couchée dans laquelle le fond se trouve dans un plan sensiblement vertical tandis que ladite paroi inférieure se trouve dans un plan sensiblement horizontal et que l'ouverture se trouve face à une paroi du compartiment et d'autre part une position inclinée dans laquelle ladite paroi inférieure est inclinée par rapport à l'horizontale et dans laquelle l'ouverture du casier se trouve en position haute par rapport au fond.

Selon l'invention, le mouvement du casier entre sa position couchée et sa position inclinée est une combinaison d'une translation dans un plan sensiblement horizontal et d'une rotation autour d'un axe sensiblement horizontal et perpendiculaire à la direction de translation du casier.

Un tel coffre à bagages permet de loger un bagage du passager assis sur le siège correspondant. Il s'agit ici d'un siège pour un seul ou bien plusieurs passagers. Le bagage est placé dans le casier lorsque celui-ci est dans sa position inclinée puis le casier est amené dans sa position couchée. Ainsi, le bagage n'est pas simplement placé dans un coffre réalisé sous l'assise du siège mais il est logé sous le siège tout en laissant la possibilité d'avoir un espace libre entre l'assise du siège et le coffre à bagages. Cet espace peut être utilisé d'une part pour loger un équipement de sécurité (par exemple un gilet de sauvetage) et d'autre part pour recevoir les pieds de la personne assise sur le siège ou d'une autre personne assise derrière elle. La combinaison d'une translation dans un plan sensiblement horizontal et d'une rotation autour d'un axe sensiblement horizontal et perpendiculaire à la direction de translation du casier permet d'optimiser l'accès au casier. Elle permet notamment, pour une même taille de casier, d'introduire un bagage plus grand que si le casier n'était par exemple que simplement pivotant.

Dans une forme de réalisation, l'axe de pivotement du casier correspond par exemple sensiblement à l'arête entre le fond du casier et la paroi inférieure se trouvant à l'horizontale en position couchée, l'axe de pivotement étant alors mobile et suivant le mouvement de translation.

L'assise du siège pivote de préférence autour d'un axe horizontal disposé au niveau de la jonction entre l'assise et le dossier du siège.

Avantageusement, le mouvement de pivotement de l'assise du siège commande le mouvement du casier. Il est ainsi inutile de manipuler séparément l'assise du siège et le casier pour mettre un bagage dans le coffre à bagages ou pour l'en sortir. Il suffit alors de faire pivoter l'assise autour de son axe de pivotement.

Pour recréer un sol plan au-dessus du coffre à bagages, ce dernier comporte par exemple un couvercle formant plancher, monté pivotant autour de l'un de ses bords, ce couvercle étant disposé entre le casier et l'assise du siège et en position sensiblement horizontale lorsque le casier est en position couchée. Une variante de réalisation permettant de recréer un sol plan au-dessus du coffre prévoit que le casier présente une paroi supérieure sensiblement horizontale lorsque le casier est en position couchée, cette paroi supérieure présentant un axe d'articulation parallèle à l'axe de pivotement de l'assise du siège. Dans ce cas, c'est le casier lui-même qui permet de former le plancher.

La présente invention concerne également un siège d'aéronef comportant une assise et un dossier, caractérisé en ce que l'assise est montée pivotante autour d'un axe sensiblement horizontal, et en ce que le siège intègre un coffre à bagages tel que décrit plus haut.

Ce siège est de préférence tel que l'axe de pivotement de l'assise est situé au niveau de la jonction entre l'assise et le dossier du siège. Ce siège peut recevoir un ou plusieurs passagers.

Dans une forme de réalisation avantageuse, le siège comporte un plancher recouvrant le casier de son coffre à bagages lorsque celui-ci est en position couchée, un couvercle étant prévu dans le plancher pour accéder au casier.

Les détails et avantages de la présente invention ressortiront mieux de la description qui suit, faite en référence au dessin schématique annexé sur lequel :
Les figures 1 à 4 montrent en perspective un siège d'aéronef muni d'un coffre à bagages selon l'invention dans quatre positions différentes d'utilisation, et
Les figures 5 à 8 correspondent respectivement aux figures 1 à 4 et représentent le siège et son coffre à bagages en vue de côté à échelle réduite.

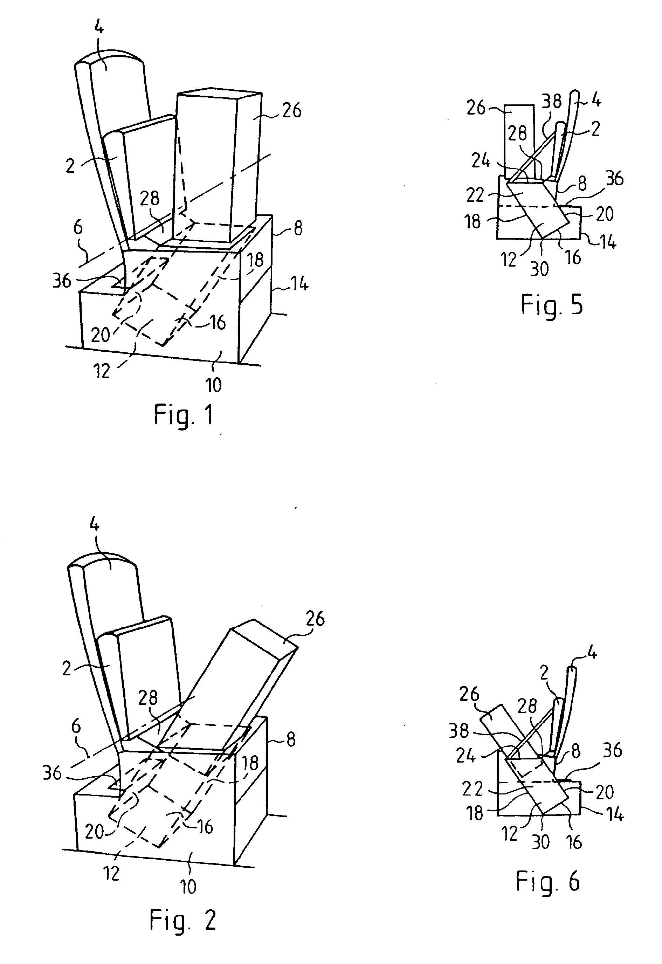

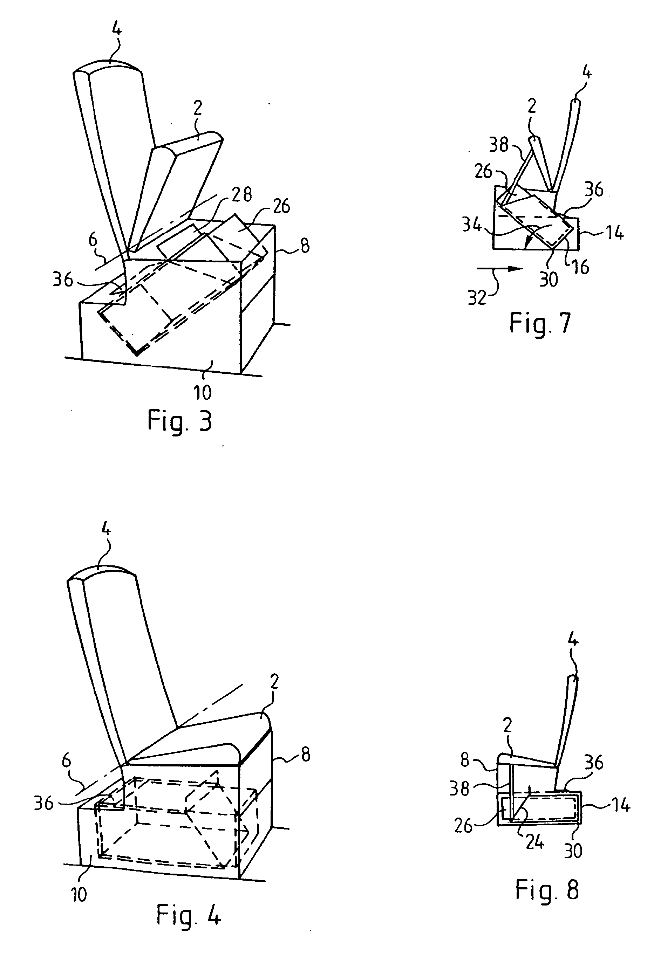

Le dessin montre un siège d'aéronef comportant une assise 2 et un dossier 4. Dans un souci de clarté, le dessin ne représente pas d'accoudoirs. La présence de ceux-ci est optionnelle. Le dossier 4 est sensiblement vertical et s'étend vers le haut depuis l'assise 2. Cette dernière est montée pivotante autour d'un axe 6. Cet axe est horizontal et se situe au niveau de la jonction entre le dossier 4 et l'assise 2. Ainsi, l'assise 2 du siège peut pivoter depuis une position sensiblement horizontale (cf figures 4 et 8) jusqu'à une position sensiblement verticale (cf figures 1 et 5) rabattue contre le dossier 4. L'assise 2 et le dossier 4 sont montés sur un châssis 8 non représenté en détail qui est par exemple un châssis tubulaire, habillé par exemple par un panneau latéral 10, notamment si le siège se trouve à l'extrémité d'une rangée de sièges.

Le siège représenté comporte un coffre à bagages accessible lorsque l'assise 2 du siège est relevée, comme représenté sur les figures 1 et 5. Le coffre à bagages de ce siège comporte un casier 12 disposé à l'intérieur d'un compartiment 14.

Le casier 12 est de forme globale parallélépipédique, biseautée à une extrémité. Il comporte un fond 16 rectangulaire à partir duquel s'étendent une face inférieure 18, une face supérieure 20 et deux faces latérales 22. Du côté opposé au fond 16, le casier 12 est ouvert. L'ouverture 24 du casier est rectangulaire et n'est pas parallèle au fond 16 mais inclinée formant ainsi l'extrémité biseautée du casier 12. Cette inclinaison est telle que les faces latérales 22 du casier sont identiques et la face supérieure 20 est de surface légèrement réduite par rapport à la face inférieure 18.

Dans la forme de réalisation représentée au dessin, les faces 18, 20 et 22 du casier sont des parois pleines mais il faut remarquer que ces faces 18, 20 et 22 ne sont pas forcément matérialisées par des parois pleines. De préférence, la face inférieure 18 et le fond 16 sont des parois pleines. Les autres faces sont indifféremment pleines ou ajourées. Pour les faces supérieure 20 et latérales 22, on peut imaginer que seules les arêtes correspondantes soient matérialisées, par exemple par une structure tubulaire. Il est aussi possible que seul le fond 16 et la face inférieure 18 soient matérialisés.

Le compartiment 14 est également de forme parallélépipédique allongée. Le fond du compartiment est formé de préférence par le plancher de la cabine de l'aéronef. Les parois latérales verticales du compartiment sont des parois pleines mais il pourrait s'agir de parois au moins partiellement ajourées ou grillagées. La paroi supérieure est quant à elle munie d'une ouverture permettant le mouvement du casier 12.

Sur les figures 1 et 5, le casier 12 est en position inclinée, prêt à recevoir un bagage 24. Ce bagage est ici un bagage normalisé correspondant à la taille maximale d'un bagage accepté généralement par les compagnies aériennes en cabine. L'assise 2 est repliée contre le dossier 4 du siège. L'ouverture 24 du casier 12 est sensiblement horizontale. Elle se trouve juste en dessous du niveau de la face inférieure de l'assise 2 lorsque celle-ci est en position rabattue (cf figures 4 et 8). L'assise 2 relevée dégage l'ouverture 24 qui est de dimensions moindres que celles de l'assise 2 et l'ouverture 24 est sensiblement centrée par rapport à la surface dégagée par le relèvement de l'assise 2.

On remarque que l'ouverture présente un rebord 28 disposé du côté de la face supérieure 20 et sensiblement perpendiculaire à cette face 20. Ce rebord 28 sert de butée et limite le mouvement du casier 12. Dans la position entièrement ouverte représentée sur les figures 1 et 5, le rebord 28 vient au contact de l'assise 2, sensiblement au niveau de l'axe 6. Ce rebord 28 est utile aussi pour empêcher de faire tomber un objet entre le casier 12 et l'assise 2 lorsque le casier 12 est dans cette position inclinée. Il est possible de prévoir un rebord similaire sur le châssis 8 pour éviter de faire tomber des objets entre le châssis 8 et le casier 12.

Dans sa position inclinée, l'arête 30 du casier se trouvant à la frontière du fond 16 et de la face inférieure 18 repose sur le fond du compartiment 14. Les faces latérales 22 sont dans un plan vertical. La face inférieure 18 est inclinée par rapport à l'horizontale. La partie haute de cette face inférieure se trouve à l'avant du siège, c'est-à-dire du côté opposé au dossier 4 tandis que la partie basse de cette face inférieure 18 se trouve vers l'arrière du siège.

Le bagage 26 est introduit dans le casier 12 lorsque celui-ci se trouve dans la position inclinée représentée sur les figures 1 et 5. Il peut ainsi glisser le long de la face inférieure 18 comme sur un toboggan (cf figures 2 et 6) jusqu'à venir contre le fond 16. Dans cette position, il est rentré à fond dans le casier 12. Ce dernier peut alors basculer pour venir se placer en position couchée sous l'assise 2.

Le mouvement du casier 12 illustré au dessin est une combinaison d'une translation et d'une rotation. La translation est une translation horizontale vers l'arrière du siège, c'est-à-dire de l'assise 2 vers le dossier 4. Elle est symbolisée sur la figure 7 par une flèche 32. La rotation est une rotation autour de l'arête 30. Elle est symbolisée sur la figure 7 par une flèche 34.

Durant ce mouvement, l'arête 30 reste au contact du fond du compartiment 14. Pour un meilleur glissement du casier, cette arête 30 peut être munie de roulettes ou bien encore de patins guidés dans des rails. D'autres moyens peuvent ici être envisagés. Cette combinaison d'une translation avec une rotation permet de faire rentrer dans le compartiment 14 des bagages 26 qui dépassent du casier 12. Le casier 12 pourrait avoir un simple mouvement de rotation mais alors la taille des bagages pouvant loger dans le compartiment 14, pour une même dimension de casier 12, serait moindre.

En fin de mouvement, le casier 12 est couché et se trouve entièrement dans le compartiment 14. Les faces inférieure 18 et supérieure 20 sont sensiblement à l'horizontale tandis que le fond 16 est sensiblement à la verticale. Les parois latérales 22 restent dans un même plan vertical mais ont pivoté dans ce plan. L'ouverture 24 se trouve face à la paroi latérale avant du compartiment 14 si bien que le bagage 26 est alors prisonnier dans le casier 12. Cette position couchée est illustrée sur les figures 4 et 8.

Le compartiment 14 peut rester ouvert depuis la butée 28 jusqu'à la paroi latérale avant de ce compartiment 14. Le passager peut alors accéder à un vêtement ou autre, qu'il a placé dans le casier sans avoir à se lever et à ouvrir le coffre à bagages. Dans ce cas, la butée 28 sert aussi de butée pour les pieds d'un passager assis derrière le siège, évitant notamment que ce passager "marche" sur les affaires rangées dans le coffre à bagages.

Tel que représenté au dessin, le compartiment 14 est de même largeur que le siège et est aligné à l'avant de ce siège. Toutefois, il dépasse à l'arrière de celui-ci et forme ainsi une marche à l'arrière du siège. Cette marche peut être utilisée comme repose pied pour le passager assis sur le siège derrière le siège représenté. Il est aussi possible de faire un faux plancher à la hauteur de la paroi supérieure du compartiment 14. Le siège est alors rehaussé par rapport à un couloir d'accès et il faut monter une marche pour accéder au siège (ou à une rangée de sièges).

Pour éviter qu'un objet, ou un pied ou bien encore une main, ne vienne se coincer lors du mouvement décrit ci-dessus entre le casier 12 et une paroi du compartiment 14, à l'arrière du siège, un volet 36 pivotant est prévu. Ce volet 36 est à l'horizontale aussi bien lorsque le casier 12 est en position couchée (figs 4 et 8) que lorsqu'il se trouve dans sa position la plus inclinée (figs 1 et 5). Entre ces deux positions extrêmes du casier 12, le volet pivote pour suivre le mouvement du casier 12, comme on peut par exemple le voir sur les figures 3 et 7. Ce volet 36 est de forme rectangulaire allongée. Il pivote le long d'un côté longitudinal sur la face supérieure du compartiment tandis que son autre côté longitudinal repose sur la face supérieure 20 du casier 12.

Parallèlement au mouvement du casier 12, l'assise 2 du siège peut se rabattre. Ces deux mouvements peuvent être indépendants l'un de l'autre. Un passager désirant ranger un bagage relève alors l'assise de son siège, puis tire sur le casier 12 pour le faire passer de sa position couchée à sa position inclinée. Il introduit ensuite son bagage dans le casier 12, le repousse pour qu'il vienne à nouveau en position couchée puis rabat l'assise 2 de son siège pour s'asseoir.

Avantageusement, le pivotement de l'assise 2 du siège commande également le mouvement du casier 12. Le passager n'a alors qu'à relever l'assise de son siège, introduire son bagage 26 et rabattre son assise. Simultanément, le casier 12 passe respectivement de sa position couchée sa position la plus inclinée pour revenir dans sa position couchée.

Pour réaliser le couplage entre le mouvement du casier et celui de l'assise, il suffit de prévoir au moins une (de préférence deux) bielle 38 reliant l'assise 2 au casier 12. Cette bielle 38 n'est représentée que sur les figures 5 à 8. Une telle bielle 38 est par exemple fixée d'une part au niveau de l'ouverture 24 sur la face inférieure 18 du casier et d'autre part sur la face inférieure de l'assise 2, c'est-à-dire la face de l'assise opposée à celle servant de support à un passager.

Lorsque le casier reçoit des objets de relativement petites dimensions, on peut prévoir qu'ils ne puissent sortir du compartiment 14 en cours de vol, par exemple lorsque l'aéronef traverse une zone de fortes turbulences. Un couvercle, venant prendre place entre le casier 12 et l'assise 2 peut ainsi être prévu. Ce couvercle n'est pas représenté au dessin. Il peut simplement s'agir d'un couvercle monté comme le volet 36 mais de dimensions telles qu'il s'étend jusqu'à l'avant du siège. Ce couvercle, en position couchée du casier 12, présente une forme telle que l'ouverture réalisée dans la paroi supérieure du compartiment 14 est entièrement obstruée par le couvercle. Le compartiment 14 est alors entièrement fermé.

Une autre solution pour fermer le compartiment 14 consiste à prévoir une face supérieure 20 de forme correspondant à la forme de l'ouverture réalisée dans la paroi supérieure du compartiment 14. Pour que la taille de cette face ne gêne pas l'introduction d'un bagage 26 dans le casier lorsque celui-ci est en position inclinée, on peut prévoir une articulation pour cette face supérieure 20 du casier 12. Cette articulation peut être réalisée au niveau de l'arête de séparation entre le fond 16 et la face supérieure 20. Pendant l'introduction du bagage dans le casier 12, la face supérieure 20 forme alors avec la face inférieure 18 un dièdre convergent vers le fond 16. L'articulation, de préférence parallèle à l'arête entre la face supérieure 20 et le fond 16, peut être disposée à un autre endroit de la face supérieure 20 et se trouver par exemple au niveau de l'ouverture 24.

Le siège et le coffre à bagages selon l'invention permettent ainsi de loger un bagage sous le siège d'un passager d'un aéronef. Un espace libre subsiste entre l'assise du siège rabattue et le coffre à bagages. Le passager assis sur le siège, ou un passager se trouvant derrière lui, trouve également de la place pour ses pieds entre l'assise et le coffre à bagages. Cet espace est suffisant pour recevoir également un équipement de sécurité tel par exemple un gilet de sauvetage.

Lorsque plusieurs sièges sont alignés pour former une rangée, on remarque que les solutions présentées plus haut pour le rangement des bagages permettent de loger un plus grand volume de bagages que les coffres à bagages connus disposés en hauteur, au-dessus des sièges. Il est possible de prévoir un coffre par siège de la rangée ou bien encore, pour augmenter le volume de rangement, un coffre commun à plusieurs sièges.

De plus, les passagers ont plus de place au-dessus de la tête et ont donc moins de risque de se heurter en se levant. Ceci permet aussi de créer un grand volume dans l'aéronef en donnant l'impression que le plafond est plus haut.

La présente invention ne se limite pas aux formes de réalisation décrites ci-dessus et représentées au dessin. Elle concerne également toutes les variantes de réalisation à la portée de l'homme du métier dans le cadre des revendications ci-après.

## Revendications

1. Coffre à bagages pour aéronef, comportant un casier (12) pour recevoir des bagages (26), de forme générale parallélépipédique et présentant un fond (16) à partir duquel s'étend au moins une paroi inférieure (18) et une ouverture (24) se trouvant du côté opposé au fond (16), ce coffre à bagages étant disposé dans un compartiment (14) sous une assise d'un siège, cette assise (2) pouvant pivoter autour d'un axe horizontal (6) et le casier (12) étant mobile entre d'une part une position couchée dans laquelle le fond (16) se trouve dans un plan sensiblement vertical tandis que ladite paroi inférieure (18) se trouve dans un plan sensiblement horizontal et que l'ouverture se trouve face à une paroi du compartiment (14) et d'autre part une position inclinée dans laquelle ladite paroi inférieure (18) est inclinée par rapport à l'horizontale et dans laquelle l'ouverture (24) du casier se trouve en position haute par rapport au fond (16),
**caractérisé en ce que** le mouvement du casier (12) entre sa position couchée et sa position inclinée est une combinaison d'une translation dans un plan sensiblement horizontal et d'une rotation autour d'un axe sensiblement horizontal et perpendiculaire à la direction de translation du casier.

2. Coffre à bagages pour aéronef selon la revendication 1, **caractérisé en ce que** l'axe de pivotement du casier (12) correspond sensiblement à l'arête (30) entre le fond (16) du casier et la face latérale inférieure (16) se trouvant à l'horizontale en position couchée, l'axe de pivotement étant mobile et suivant le mouvement de translation.

3. Coffre à bagages pour aéronef selon l'une des revendications 1 ou 2, **caractérisé en ce que** l'assise (2) du siège pivote autour d'un axe horizontal (6) disposé au niveau de la jonction entre l'assise (2) et le dossier (4) du siège.

4. Coffre à bagages pour aéronef selon l'une des revendications 1 à 3, **caractérisé en ce que** le mouvement de pivotement de l'assise (2) du siège commande le mouvement du casier (12).

5. Coffre à bagages pour aéronef selon l'une des revendications 1 à 4, **caractérisé en ce qu'**il comporte un couvercle formant plancher, monté pivotant autour de l'un de ses bords, ce couvercle étant disposé entre le casier (12) et l'assise (2) du siège et étant en position sensiblement horizontale lorsque le casier (12) est en position couchée.

6. Coffre à bagages pour aéronef selon l'une des revendications 1 à 5, **caractérisé en ce que** le casier présente une paroi supérieure (20) sensiblement horizontale lorsque le casier (12) est en position couchée, cette paroi supérieure (20) présentant un axe d'articulation parallèle à l'axe de pivotement (6) de l'assise (2) du siège.

7. Siège d'aéronef comportant une assise (2) et un dossier (4), **caractérisé en ce que** l'assise (2) est montée pivotante autour d'un axe (6) sensiblement horizontal, et **en ce que** le siège intègre un coffre à bagages selon l'une des revendications 1 à 6.

8. Siège d'aéronef selon la revendication 7, **caractérisé en ce que** l'axe de pivotement (6) de l'assise (2) est situé au niveau de la jonction entre l'assise (2) et le dossier (4) du siège.

9. Siège d'aéronef selon l'une des revendications 7 ou 8, **caractérisé en ce qu'**il comporte un plancher recouvrant le casier (12) de son coffre à bagages lorsque celui-ci est en position couchée, un couvercle étant prévu dans le plancher pour accéder au casier.

## Claims

1. A luggage locker for an aircraft, comprising a case (12) for receiving luggage (26), of parallelepiped general shape and having a back (16) from which extends at least one lower wall (18) and an opening (24) situated at the opposite end to the back (16), said luggage locker being disposed in a compartment (14) under a seat-rest of a seat, said seat-rest (2) being pivotable about a horizontal axis (6) and the case (12) being moveable between a lying down position in which the back (16) is situated in a substantially vertical plane while said lower wall (18) is situated in a substantially horizontal plane and the opening is situated facing a wall of the compartment (14), and an inclined position in which said lower wall (18) is inclined to the horizontal and in which the opening (24) of the case is situated in a raised position relative to the back (16),
**characterized in that** the movement of the case (12) between its lying down position and its inclined position is a combination of a translation in a substantially horizontal plane and of a rotation about an axis that substantially horizontal and perpendicular to the direction of translation of the case.

2. An aircraft luggage locker according to claim 1, **characterized in that** the pivotal axis of the case (12) substantially corresponds to the intersection line (30) between the back (16) of the case and the lower side face (16) located horizontally in lying down position, the pivotal axis being moveable and following the translation movement.

3. An aircraft luggage locker according to one of claims 1 or 2, **characterized in that** the seat-rest (2) of the seat pivots about a horizontal axis (6) situated at the junction between the seat-rest (2) and the back-rest (4) of the seat.

4. An aircraft luggage locker according to one of claims 1 to 3, **characterized in that** the pivotal movement of the seat-rest (2) of the seat causes the movement of the case (12).

5. An aircraft luggage locker according to one of claims 1 to 4, **characterized in that** it comprises a platform forming cover, pivotally mounted about one of its edges, said cover being disposed between the case (12) and the seat-rest (2) of the seat and being in substantially horizontal position when the case (12) is in lying down position.

6. An aircraft luggage locker according to one of claims 1 to 5, **characterized in that** the case has an upper wall (20) that is substantially horizontal when the case (12) is in lying down position, said upper wall (20) having a hinging axis parallel to the pivotal axis (6) of the seat-rest (2) of the seat.

7. An aircraft seat comprising a seat-rest (2) and a back-rest (4), **characterized in that** the seat-rest (2) is pivotally mounted about a substantially horizontal axis (6), and **in that** the seat integrates a luggage locker according to one of claims 1 to 6.

8. An aircraft seat according to claim 7, **characterized in that** the pivotal axis (6) of the seat-rest (2) is situated at the junction between the seat-rest (2) and the back-rest (4) of the seat.

9. An aircraft seat according to one of claims 7 or 8, **characterized in that** it comprises a platform covering the case (12) of its luggage locker when the latter is in lying down position, a cover being provided in the platform to provide access to the case.

## Patentansprüche

1. Gepäckablage für ein Flugzeug, umfassend einen zur Aufnahme von Gepäckstücken (26) dienenden Kasten (12) von allgemeiner Parallelepipedform mit einem Boden (16), von dem aus sich mindestens eine untere Wand (18) erstreckt, und einer Öffnung (24), die sich auf der dem Boden (16) entgegengesetzten Seite befindet, wobei diese Gepäckablage in einem Abteil (14) unter der Sitzfläche eines Sitzes angeordnet ist, wobei diese Sitzfläche (2) um eine horizontale Achse (6) verschwenkbar ist und der Kasten (12) beweglich ist zwischen einerseits einer liegenden Stellung, in der der Boden (16) sich in einer im Wesentlichen vertikalen Ebene befindet, während die untere Wand (18) sich in einer im Wesentlichen horizontalen Ebene befindet und die Öffnung sich vor einer Wand des Abteils (14) befindet, und andererseits einer geneigten Stellung, in der die untere Wand (18) gegen die Horizontale geneigt ist und in der die Öffnung (24) des Kastens sich bezüglich des Bodens (16) in oberer Stellung befindet, **dadurch gekennzeichnet, dass** die Bewegung des Kastens (12) zwischen seiner liegenden Stellung und seiner geneigten Stellung eine Kombination einer Translation in einer im Wesentlichen horizontalen Ebene und einer Drehung um eine im Wesentlichen horizontale und zur Translationsrichtung des Kastens senkrechte Achse ist.

2. Gepäckablage für ein Flugzeug nach Anspruch 1, **dadurch gekennzeichnet, dass** die Schwenkachse des Kastens (12) im Wesentlichen der Kante (30) zwischen dem Boden (16) des Kastens und der unteren Seitenfläche (16) entspricht, die sich in der liegenden Stellung in der Horizontalen befindet, wobei die Schwenkachse beweglich ist und der Translationsbewegung folgt.

3. Gepäckablage für ein Flugzeug nach einem der Ansprüche 1 oder 2, **dadurch gekennzeichnet, dass** die Sitzfläche (2) des Sitzes um eine horizontale Achse (6) verschwenkbar ist, die auf Höhe der Verbindung zwischen der Sitzfläche (2) und der Rückenlehne (4) des Sitzes angeordnet ist.

4. Gepäckablage für eine Flugzeug nach einem der Ansprüche 1 bis 3, **dadurch gekennzeichnet, dass** die Schwenkbewegung der Sitzfläche (2) des Sitzes die Bewegung des Kastens (12) steuert.

5. Gepäckablage für ein Flugzeug nach einem der Ansprüche 1 bis 4, **dadurch gekennzeichnet, dass** sie einen einen Boden bildenden Deckel umfasst, der um einen seiner Ränder verschwenkbar montiert ist, wobei dieser Deckel zwischen dem Kasten (12) und der Sitzfläche (2) des Sitzes angeordnet ist und in einer im Wesentlichen horizontalen Lage ist, wenn der Kasten (12) in liegender Stellung ist.

6. Gepäckablage für ein Flugzeug nach einem der Ansprüche 1 bis 5, **dadurch gekennzeichnet, dass** der Kasten eine obere Wand (20) aufweist, die im Wesentlichen horizontal ist, wenn der Kasten (12) in liegender Stellung ist, wobei diese obere Wand (20) eine Gelenkachse aufweist, die zur Schwenkachse (6) der Sitzfläche (2) des Sitzes parallel ist.

7. Flugzeugsitz, umfassend eine Sitzfläche (2) und eine Rückenlehne (4), **dadurch gekennzeichnet, dass** die Sitzfläche (2) um eine im Wesentlichen horizontale Achse (6) verschwenkbar montiert ist und dass in den Sitz eine Gepäckablage nach einem der Ansprüche 1 bis 6 integriert ist.

8. Flugzeugsitz nach Anspruch 7, **dadurch gekennzeichnet, dass** die Schwenkachse (6) des Sitzes (2) auf Höhe der Verbindung zwischen der Sitzfläche (2) und der Rückenlehne (4) des Sitzes gelegen ist.

9. Flugzeugsitz nach einem der Ansprüche 7 oder 8, **dadurch gekennzeichnet, dass** er einen Boden umfasst, der den Kasten (12) seiner Gepäckablage bedeckt, wenn dieser in liegender Stellung ist, wobei in dem Boden ein Deckel vorgesehen ist, um den Kasten zugänglich zu machen.
